# DEMANDE DE BREVET EUROPEEN

(11) **EP 0 728 619 A1**
(43) Date de publication de la demande: **28.08.1996**
(21) Numéro de dépôt: 96490011.2
(22) Date de dépôt: 20.02.1996
(51) Int. Cl.: B60R 11/02, H04R 5/02

(54) **Support boîtier de combiné téléphonique portatif adaptable sur véhicule automobile**

(30) Priorité: 23.02.1995 FR 9502330
(71) Demandeur: Vandamme, Georges, F-59700 Marcq-en-Baroeul (Nord) (FR)
(72) Inventeur: Vandamme, Georges, F-59700 Marcq-en-Baroeul (Nord) (FR)
(74) Mandataire: Lepage, Jean-Pierre

(57) **Abrégé**

Selon l'invention, il est caractérisé par le fait qu'il comprend :
- des moyens de fixation (11) au niveau des tiges (8) des appuis-tête des sièges du véhicule, lesdits moyens autorisant la rotation du support autour des tiges (8),
- un boîtier porteur (16) du combiné téléphonique susceptible d'être réglé en rotation et en translation pour s'adapter à la morphologie du conducteur assis à l'intérieur du véhicule et placer le combiné à proximité de son oreille.

Application dans le domaine des accessoires automobiles construits sur un véhicule ou adaptés sur des véhicules existants.

## Description

La présente invention est relative à un support boîtier de combiné téléphonique portatif adaptable sur véhicule automobile.

Elle trouvera notamment son application dans le domaine des accessoires automobiles construits sur un véhicule neuf ou adaptés sur des véhicules existants.

Le support boîtier de combiné téléphonique selon l'invention est particulièrement destiné à un conducteur ou à un passager assis à l'intérieur du véhicule sur le siège avant ou arrière. Il rendra des services aux passagers mais il est tout particulièrement adapté au conducteur qui devra, simultanément à la conversation téléphonique, poursuivre sa conduite automobile.

On connaît actuellement de nombreuses installations téléphoniques utilisables notamment dans un véhicule automobile mais elles présentent très souvent un matériel coûteux et une main d'oeuvre qualifiée pour le montage, ce qui augmente considérablement le prix global d'achat de téléphones portatifs pour l'utilisation en voiture. Le téléphone portatif comprend par exemple un socle permettant la recharge de l'appareil et l'amplification du son ainsi que le diffuseur pour capter la conversation.

Il existe aujourd'hui de nombreuses installations avec des combinés de formes très diverses en dimension et également en fonction. Il est nécessaire en effet de répartir le mieux possible l'amplificateur et le micro à l'intérieur du véhicule.

Lorsque l'on désire dans un véhicule disposer d'une installation dite "à main libre", il faut prévoir un support monté de façon fixe sur le véhicule branché sur l'allume cigare pour la recharge des batteries et relié à un micro disposé sur le plafond de l'habitacle de la voiture à hauteur du pare-brise. L'objet de cette installation téléphonique dans le véhicule automobile est de permettre la conversation au moyen d'un micro mais également de recevoir la conversation du correspondant par un amplificateur intégré au support du combiné.

Le prix de cette installation est actuellement important, ce qui empêche d'utiliser librement le téléphone portatif de faible puissance aussi bien à l'intérieur du véhicule qu'à l'extérieur.

L'objet de la présente invention est de supprimer cette installation car ce qui oblige l'utilisation du micro et de l'amplificateur aujourd'hui, c'est l'éloignement du combiné téléphonique du conducteur tenant le volant.

La présente invention vise à remédier à ces inconvénients et un des premiers objets du support boîtier de combiné téléphonique portatif adaptable sur un véhicule automobile selon l'invention est de pouvoir se monter sur tous les véhicules et de s'adapter à toutes les morphologies des conducteurs en permettant que la conversation téléphonique soit établie dans les meilleures conditions d'écoute et d'émission du son mais aussi de conduite automobile.

Un autre avantage du support boîtier de combiné téléphonique portatif adaptable sur un véhicule automobile selon l'invention est de pouvoir être utilisé avec tous les types de combinés existants et de nombreux modèles pourront être mis en oeuvre quelles que soient leur dimension, largeur, épaisseur ou conception.

Un autre avantage du support boîtier de combiné téléphonique portatif adaptable sur un véhicule automobile selon l'invention est de pouvoir être utilisé par un passager ou le chauffeur assis sur un siège en rapprochant le combiné de la bouche et de l'oreille. On utilise un support qui s'adapte sur les sièges avant au niveau des appuis-tête et permet de régler la situation idéale du combiné dans l'espace en fonction de la morphologie du conducteur.

Un autre but du support boîtier de combiné téléphonique portatif adaptable sur un véhicule automobile selon l'invention est de permettre une meilleure écoute téléphonique avec une bonne conduite du véhicule.

Un autre avantage du support boîtier de combiné téléphonique portatif adaptable sur un véhicule automobile selon l'invention est de pouvoir être replié après utilisation sans gêner le champ du rétroviseur arrière.

Un autre but du support boîtier de combiné téléphonique portatif adaptable sur un véhicule automobile selon l'invention est de placer le combiné à proximité de l'oreille et de la bouche du conducteur tout en lui laissant les mains libres.

Un autre but du support boîtier de combiné téléphonique portatif adaptable sur un véhicule automobile selon l'invention est d'être conçu pour assurer la sécurité du conducteur car, en cas de choc latéral, le support pivote soit autour de la tige de l'appui-tête, soit sur l'axe de rotation du dispositif de sécurité pour passager arrière qui empêche le support boîtier de combiné de pivoter intempestivement dans la zone de la banquette arrière.

Un autre avantage du support boîtier de combiné téléphonique portatif adaptable sur un véhicule automobile selon l'invention est de pouvoir être monté indifféremment sur une tige d'appui-tête de droite pour la conduite à gauche ou sur la tige d'appui-tête de gauche pour une conduite à droite (réseau routier anglais), toutes les pièces étant réversibles.

Un autre avantage du support boîtier de combiné téléphonique portatif adaptable sur un véhicule automobile selon l'invention est que le combiné peut être autonome (le téléphone portatif étant monté en permanence). Sur le support est prévue une plaque en U ou une chape sur sa face arrière pour emboîter facilement avec une seule main le combiné sur le support. Cela facilite la mise en place du combiné en position d'écoute tout en conduisant le véhicule automobile.

A cet effet, l'invention concerne un support boîtier de combiné téléphonique portatif adaptable sur un véhicule automobile destiné à un conducteur ou à un passager assis sur un siège, caractérisé par le fait qu'il comprend :
- des moyens de fixation au niveau des tiges des appuis-tête des sièges du véhicule, lesdits moyens autorisant la rotation du support autour des tiges,
- un boîtier porteur du combiné téléphonique susceptible d'être réglé en rotation et en translation pour s'adapter à la morphologie du conducteur assis à l'intérieur du véhicule et placer le combiné à proximité de son oreille.

L'invention sera bien comprise en se référant à la description suivante d'un mode d'exécution non limitatif illustré par les dessins annexés ci-après dans lesquels :
la figure 1 est une vue schématique des supports de combiné téléphonique selon l'invention mis en place sur des sièges disposés à l'intérieur d'un véhicule,
la figure 2 est une vue en perspective d'un premier mode d'exécution du support boîtier de combiné téléphonique selon l'invention,
la figure 3 est une vue en perspective d'un deuxième mode d'exécution du support boîtier de combiné téléphonique selon l'invention, mettant en place une rotation autour de la tige d'appui tête supprimant une articulation,
la figure 4 est une vue partielle d'une variante d'exécution d'un support boîtier de combiné téléphonique selon l'invention, montrant la rotation autour de la tige d'appui tête et une articulation autobloquante,
la figure 5 est une vue schématique du montant des appuis tête du véhicule sur lesquels on a adapté un dispositif de sécurité permettant d'utiliser le combiné sur 180° et éviter qu'il ne pivote intempestivement dans la zone du passager arrière.

Le support boîtier de combiné téléphonique selon l'invention pourra être utilisé avec un combiné téléphonique portatif qui est aujourd'hui adaptable sur de nombreux véhicules automobiles. Le support boîtier pourra être utilisé avec tous les types de téléphone connus actuellement, c'est-à-dire téléphone de voiture comprenant un écouteur et un fil et un téléphone portable comportant également un téléphone et un fil. Il pourra aussi être utilisé avec un téléphone portatif complètement indépendant de l'installation de la voiture et sans fil. Ce combiné téléphonique portatif implique donc qu'il puisse être utilisé par le conducteur ou par le passager à l'intérieur du véhicule lorsque celui-ci est en mouvement ou à l'arrêt mais également à l'extérieur du véhicule lorsque le conducteur souhaite quitter son véhicule et se promener dans un environnement adapté.

Le support boîtier de combiné téléphonique selon l'invention permettra donc à l'utilisateur d'avoir au volant de sa voiture une conversation téléphonique confidentielle vis-à-vis des passagers se trouvant assis dans la voiture. Cette confidentialité sera obtenue en utilisant le support personnel et en coupant le micro et l'écouteur.

L'installation à main libre des combinés téléphoniques portatifs existants est en général assez complexe au niveau de sa conception car ils imposent l'utilisation d'un micro et d'un amplificateur compte tenu de l'éloignement du combiné téléphonique du tableau de bord et du conducteur tenant le volant. Pour diminuer le prix de revient du combiné téléphonique portatif, la présente invention met en place un support boîtier de conception simple qui permettra de supprimer l'installation coûteuse existante et donc de réduire considérablement le prix de revient mais également l'installation d'un kit "mains libres".

Le support boîtier de combiné téléphonique portatif selon l'invention pourra être fabriqué par des fabricants d'accessoires automobiles et pourra être adapté très facilement, quel que soit le type de véhicule. Son réglage est également étudié et approprié pour disposer le combiné téléphonique dans une situation idéale par rapport à l'utilisateur assis sur un siège automobile et ceci naturellement dans un but d'améliorer la conversation téléphonique en facilitant l'écoute et la parole directement mais également en facilitant la bonne conduite du véhicule.

Pour faciliter l'écoute et la parole, compte tenu que les usagers seront très différents, personne très grande et très large, personne petite et menue, il faudra pouvoir adapter le support boîtier du combiné à ces différents utilisateurs.

L'invention a donc prévu différents modes d'exécution mettant en place seulement une rotation sans articulation pour réaliser un dispositif simplifié. Ce dispositif pourra néanmoins être plus difficilement utilisé par une personne de grande taille, c'est pourquoi, dans un autre mode d'exécution, l'invention prévoit de mettre en oeuvre un support avec une rotation et une articulation qui pourra être autobloquante ou non.

Le support boîtier de combiné téléphonique portatif selon l'invention pourra également être utilisé en toute sécurité pour l'utilisateur et pour les passagers de la voiture : on a prévu pour cela que le support boîtier de combiné puisse tourner autour de l'appui-tête sur lequel il est fixé pour rendre le support escamotable en cas de choc latéral. Une butée de sécurité permettant d'utiliser le combiné seulement sur 180° permettra également d'éviter que le support ne pivote intempestivement dans la zone du passager arrière.

Le support boîtier de combiné téléphonique selon l'invention sera également particulièrement étudié pour recevoir et s'adapter à tous les types de combinés téléphoniques existants. Pour cela, le boîtier dans lequel sera introduit le combiné sera particulièrement adapté pour être facilement positionné. L'invention a prévu différentes variantes de support boîtier de combiné, permettant de s'adapter à différentes situations et à différentes natures de combiné. On pourra ainsi utiliser des combinés avec des touches et micro du même côté, ou des combinés avec des touches et micro sur des faces opposées.

Pour faciliter l'adaptation du support boîtier de combiné téléphonique selon l'invention à tous les types de véhicules et notamment à ceux avec conduite à droite ou conduite à gauche, on a prévu un support unique car l'appareil est réversible en conduite à gauche et en conduite à droite.

L'invention pourra également être adaptée dans une position droite ou gauche selon le confort de l'utilisateur qui souhaite écouter de l'oreille droite ou de l'oreille gauche.

On se réfère aux figures qui montrent un véhicule automobile (1) avançant par exemple dans le sens de la flèche (2) et dans lequel sont placés des sièges (3 et 4). Ces sièges peuvent être les sièges avant du véhicule et dans cc cas, le siège (3) pourrait être le siège d'un passager alors que le siège (4) est le siège du conducteur. Les sièges (3 et 4) peuvent aussi être les sièges arrière si le véhicule est équipé d'appui-tête à l'arrière.

La majorité des sièges automobiles est constituée d'une assise (5), d'un dossier (6) et d'un appui-tête (7). L'appui-tête est en général relié au dossier au moyen de tiges d'appui-tête désignées généralement par (8).

Selon le type du véhicule, les appuis-tête sont de dimensions variables et en nombre plus ou moins important mais ils sont généralement toujours reliés au dossier (6) par l'intermédiaire de tiges (8) qui peuvent quelquefois servir à régler la hauteur de l'appui-tête (7) par rapport au dossier.

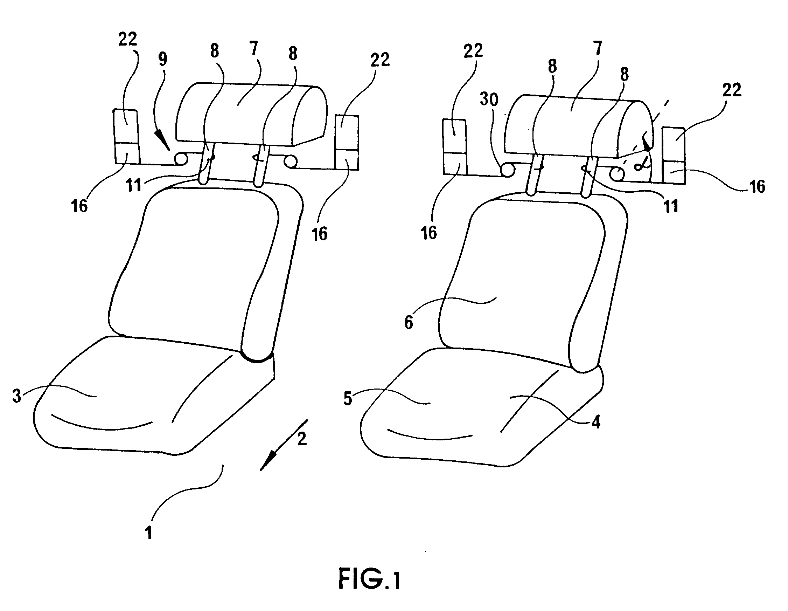

On a représenté à la figure 1 des sièges (3 et 4) avec deux tiges d'appui tête de forme ronde mais elles pourraient également être carrées et en nombre différent.

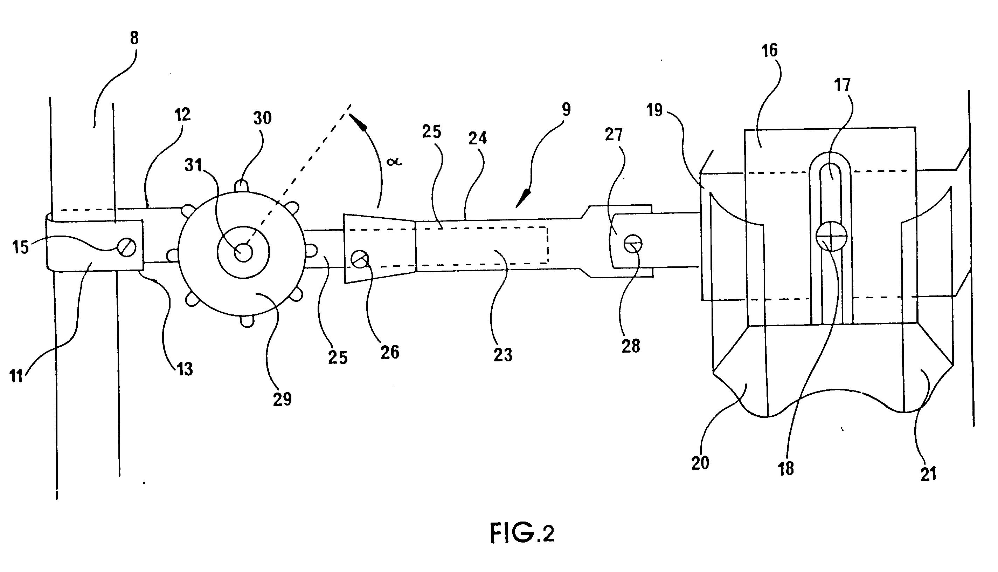

On a représenté à la figure 2 une variante d'un support boîtier de combiné téléphonique selon l'invention, désigné généralement par (9) qui comprend des moyens de fixation (11) au niveau des tiges (8) des appuis-tête des sièges de véhicule. Dans l'exemple représenté, ces moyens de fixation sont constitués par un U dans lequel s'engage la tige de l'appui-tête. Les deux ailes (12 et 13) du U sont rapprochées au moyen d'une vis de réglage (15) qui permet de fixer le support boîtier du combiné sur la tige d'appui-tête tout en autorisant sa rotation autour de cette dernière.

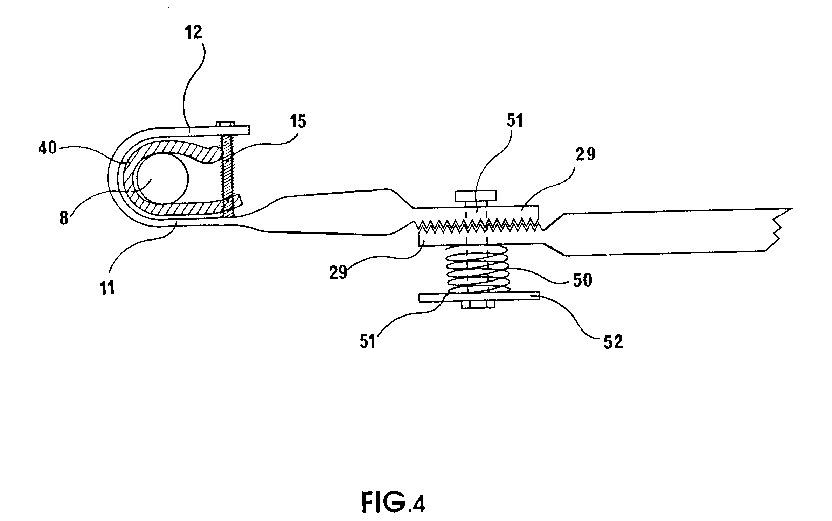

En se référant à la figure 4, on voit comment le support boîtier de combiné téléphonique peut pivoter autour de l'appui-tête (8). On a prévu par exemple une pièce intermédiaire en matière plastique (40) qui permet le rapprochement des ailes (11 et 12) par la vis (15) tout en autorisant la rotation sans grippage autour de la tige (8).

Cette rotation du support boîtier de combiné téléphonique autour de la tige d'appui-tête (8) montre d'une part que celui-ci n'est pas fixé à cette tige car la rotation du support est nécessaire pour les raisons suivantes :
- écarter ou rapprocher le combiné du visage du conducteur pour obtenir une écoute optimale,
- en cas de non utilisation, on peut escamoter l'appareil dans un sens latéral,
- elle permet par pression du visage l'autodéplacement vers la droite ou vers la gauche du support en cas de choc latéral.

Les moyens de fixation (11) pourront naturellement être adaptés à la section des tiges rondes ou carrées des appuis-tête mais également à leur diamètre de l'ordre de quelques dizaines de millimètres, ces moyens de fixation adaptés devront naturellement autoriser la libre rotation du support autour des tiges.

On a représenté à la figure 2 un boîtier porteur du combiné désigné généralement par (16) qui comprend une lumière (17) et une vis de fixation (18) permettant de régler sa hauteur sur une plaque (19).

Le boîtier porteur du combiné présente deux ailes (20 et 21) qui permettront de maintenir le combiné téléphonique lorsqu'il sera posé sur son boîtier porteur (16). Le combiné a été représenté schématiquement à la figure 1 en (22).

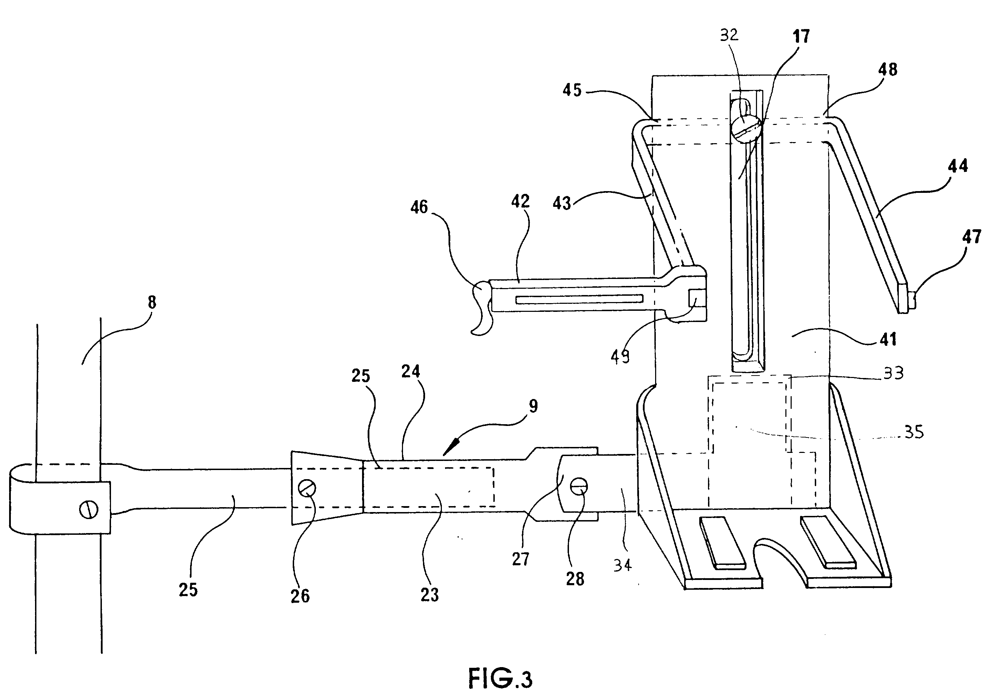

On a représenté à la figure 2 une solution pour un boîtier porteur mais celui-ci pourra être adapté ou amélioré selon les besoins. On a représenté à la figure 3 une variante d'un boîtier de combiné téléphonique, qui a été prévu sans joue latérale qui peuvent pour certaines applications gêner lors du positionnement du combiné. Le support boîtier qui a été prévu à la figure 3 est particulièrement adapté lorsque l'on cherche à utiliser des combinés avec des touches d'un côté ou de l'autre. La suppression des joues et la forme dépouillée du support boîtier (41) permet de poser facilement le combiné puis de verrouiller un étrier comprenant les ailes (43, 44 et 45) qui ceinturent le combiné. L'étrier se referme au moyen d'une barrette (42) munie d'un clips (46) qui s'engage en position fermée sur l'extrémité (47) de l'aile (44). Avantageusement, l'étrier pourra être articulé en (48) et la barrette en (49).

La longueur des ailes (43 et 44) est prévue pour s'adapter à la dimension moyenne d'un combiné actuel mais il est certain que si elle était trop grande, on pourrait alors interposer une plaque de mousse pour compenser la différence d'épaisseur. En se référant à la figure 3, on voit que la lumière (17) permet de fixer l'étrier en une position appropriée, par l'intermédiaire d'une vis (32).

Il est à remarquer que, pour faciliter la mise en place du boîtier porteur (41), l'invention a prévu, dans un mode particulier de réalisation, la présence d'une plaque ou chape (33) prévue sur la face arrière du boîtier porteur (41). Cette plaque en U (33) permet d'emboîter l'extrémité verticale (35) du bras (34) lui-même fixé en (27) au support articulé relié à la tige d'appui-tête. Ceci facilite la mise en place du boîtier équipé de son téléphone portatif lorsque le conducteur souhaite conduire son véhicule et mettre en place le boîtier d'une seule main.

Le boîtier porteur (16) du combiné est prolongé par un bras (23) constitué par deux éléments télescopiques (24 et 25). Ces bras télescopiques permettront de régler la distance entre le boîtier porteur du combiné et la tige d'appui-tête (8) pour s'adapter à toutes les morphologies du conducteur. Les tubes télescopiques (24 et 25) ont également la possibilité de pivoter les uns par rapport aux autres pour orienter dans une direction supplémentaire le combiné par rapport à la tige de l'appui-tête. Lorsque la position idéale du combiné a été déterminée et adaptée pour chaque conducteur, on pourra bloquer la position des bras (24 et 25) au moyen de la vis (26).

Une extrémité du bras (24) est reliée en (27) au boîtier porteur du combiné et il est bloqué dans la position relative souhaitée au moyen d'une vis (28).

Le bras (24) et le boîtier porteur (16) du combiné téléphonique sont susceptibles d'être réglés en rotation au moyen de deux faces crantées (29) disposées sur deux surfaces en contact. L'application des deux surfaces l'une sur l'autre est réalisée au moyen d'une molette (30). Cette molette permet, lorsqu'elle est desserrée, de régler l'angle α à une valeur déterminée souhaitée par le conducteur assis sur le siège comme étant la position idéale du combiné.Lorsque l'angle α est choisi par rapport au conducteur, on pourra alors serrer la molette (30) et immobiliser la position du boîtier porteur du combiné par rapport à la tige de l'appui-tête. L'angle α pourra donc être ainsi adapté à chaque conducteur pour prendre une valeur de 0 à 90°.

Le mode d'exécution réalisé à la figure 2 comprend une molette (30) qui se serre manuellement après réglage. Dans une autre variante schématisée à la figure 4, on a prévu les deux surfaces crantées (29) disposées au contact l'une de l'autre, sur lesquelles est exercée une pression par un ressort (50) engagé sur un axe (51) avec une rondelle (52). L'autoblocage pourra être utilisé par exemple dans le cas où l'on souhaite s'adapter plus rapidement aux différentes morphologies du conducteur.

On a ainsi réalisé un support boîtier de combiné téléphonique portatif adaptable sur un véhicule automobile permettant de régler de nombreux paramètres pour s'adapter d'une part à la voiture et d'autre part au conducteur. Les dispositions judicieuses de ce support au niveau des tiges d'appui-tête du siège du véhicule et son réglage en rotation et en translation permettront de placer le combiné téléphonique dans une position idéale bouche-oreille afin d'autoriser la meilleure conversation téléphonique tout en permettant éventuellement de poursuivre la conduite.

Le support boîtier de combiné téléphonique portatif adaptable sur un véhicule automobile selon l'invention pourra également, comme représenté à la figure 1, être fixé en quatre positions différentes sur les deux sièges avant ou arrière. On pourra disposer sur chaque siège d'une position droite ou gauche selon que le conducteur souhaite une écoute par l'oreille droite ou l'oreille gauche.

La disposition entre les deux sièges (3 et 4) des boîtiers porteurs de combiné (16) est telle qu'elle ne gêne pas le champ de vision du rétroviseur.

Le support boîtier de combiné téléphonique selon l'invention a également été conçu pour ne disposer que d'un seul support, que celui-ci soit monté à droite ou à gauche, il suffit pour cela d'inverser les éléments au moyen des vis (18, 28 ou 15).

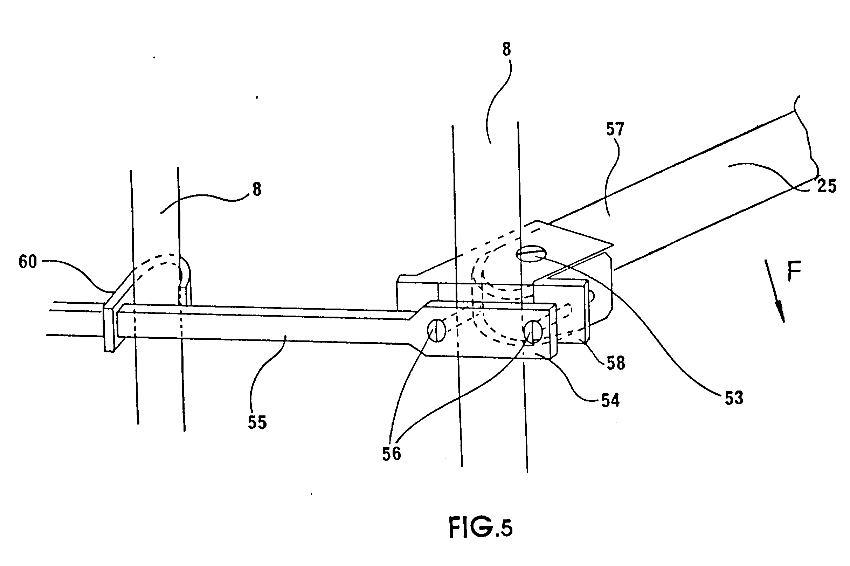

Le support boîtier de combiné téléphonique selon l'invention est particulièrement conçu pour donner une sécurité accrue à l'utilisateur. Cette sécurité est tout d'abord obtenue en cas de choc latéral puisque l'on peut obtenir une rotation du support téléphonique autour de l'appui-tête (8) et donc un escamotage de l'ensemble de l'appareil de la tête de l'utilisateur. On a également prévu de protéger les passagers arrière du véhicule en munissant le dispositif d'une butée de sécurité permettant d'utiliser le combiné sur 180° et éviter qu'il ne pivote intempestivement dans la zone du passager arrière. On se réfère pour cela à la figure 5 qui montre un véhicule avec deux tiges d'appui-tête (8) sur lequel a été monté le dispositif de sécurité.

L'élément télescopique (25) du support des figures 2 ou 3 est relié à l'appui-tête par l'intermédiaire d'un axe (53) autour duquel il pivote. Sur le premier appui-tête (8), on a aménagé une butée (54) serrée sur l'appui-tête au moyen d'une tige (55) dans laquelle s'engagent deux vis de fixation (56).

L'extrémité (57) de l'élément télescopique (25) se termine par une butée (58). Lors du déplacement du support dans le sens de la flèche F, la butée (58) de l'extrémité de l'élément télescopique (25) viendra au contact de la butée (54) aménagée à proximité de l'appui-tête (8). Cette butée empêche donc au support de pivoter plus loin que 180° ce qui pourrait gêner ou blesser un passage arrière assis dans le véhicule.

Au moment du contact des butées (54 et 58), c'est le deuxième support (60) prévu sur la deuxième tige d'appui-tête qui permet de maintenir l'ensemble de l'appareil et l'empêche de tourner.

En ce qui concerne la facilité d'utilisation, on constate (figure 4) une possibilité d'orientation verticale du boîtier porteur autour de l'axe (51) par les deux faces crantées (29) et la molette (30). Le boîtier porteur (16) du combiné téléphonique est également inclinable et peut être bloqué dans sa position optimum. L'ensemble de ces réglages a été étudié pour s'adapter aux différentes morphologies des conducteurs et placer le combiné à proximité de l'oreille et de la bouche tout en laissant les mains libres.

La fixation du combiné (22) peut se faire par différents moyens et notamment par deux bandes textiles dites "velcro" avec une bande fixée sur la plaque (19) et l'autre bande fixée sur le dos du combiné. On pourrait encore utiliser un crochet sur le combiné ou un autocollant double face. Ces éléments viendraient naturellement remplacer le boîtier porteur (16) décrit à la figure 2.

Il est à remarquer que le support boîtier de combiné téléphonique selon l'invention est naturellement utilisable dans la voiture lorsque celle-ci est en marche ou lorsque celle-ci est arrêtée. Il faut également prévoir que l'utilisateur l'emmène avec lui hors de la voiture.

Dans le cas où le conducteur attend un appel téléphonique, il met le combiné en attente sur le support boîtier selon l'invention, légèrement écarté de son oreille. En cas d'appel, il rapproche le support et peut écouter et parler directement de façon audible pour lui-même et son correspondant tout en continuant à conduire.

Le trajet terminé, l'utilisateur décroche le combiné, rabat le support autour de la tige (8) et emporte le combiné (22) avec lui.

## Revendications

1. Support boîtier de combiné téléphonique portatif adaptable sur un véhicule automobile destiné à un conducteur ou à un passager assis sur un siège, caractérisé par le fait qu'il comprend :
- des moyens de fixation (11) au niveau des tiges (8) des appuis-tête (7) des sièges du véhicule, lesdits moyens autorisant la rotation du support autour des tiges (8),
- un boîtier porteur (16) du combiné téléphonique (22) susceptible d'être réglé en rotation et en translation pour s'adapter à la morphologie du conducteur assis à l'intérieur du véhicule et placer le combiné à proximité de son oreille.

2. Support boîtier de combiné téléphonique portatif adaptable sur un véhicule automobile, selon la revendication 1, caractérisé par le fait qu'il comprend un bras extensible (23) relié au boîtier porteur (16) du combiné et aux moyens de fixation (11).

3. Support boîtier de combiné téléphonique portatif adaptable sur un véhicule automobile, selon la revendication 2, caractérisé par le fait que le bras extensible (23) est également réglable en rotation au moyen d'une vis (26).

4. Support boîtier de combiné téléphonique portatif adaptable sur un véhicule automobile, selon la revendication 1, caractérisé par le fait que les moyens pour régler en rotation sont constitués par deux faces crantées (29) manoeuvrables par une molette (30).

5. Support boîtier de combiné téléphonique portatif adaptable sur un véhicule automobile, selon la revendication 1, caractérisé par le fait que les moyens de fixation (11) au niveau des tiges (8) d'appui-tête (7) sont adaptés à la section des tiges rondes ou carrées ainsi qu'à leur diamètre.

6. Support boîtier de combiné téléphonique portatif adaptable sur un véhicule automobile, selon la revendication 1, caractérisé par le fait que le support peut être fixé sur les tiges d'appui-tête en position droite ou gauche.

7. Support boîtier de combiné téléphonique portatif adaptable sur un véhicule automobile, selon la revendication 1, caractérisé par le fait que le boîtier porteur (16) est un support plat sur lequel on vient poser le combiné et que l'on prévoit un étrier articulé avec clips pour immobiliser le combiné dans le support.

8. Support boîtier de combiné téléphonique portatif adaptable sur un véhicule automobile, selon la revendication 1, caractérisé par le fait que les moyens de fixation (11) au niveau des tiges d'appui-tête présentent un dispositif de sécurité avec des butées (54 et 58) susceptibles de limiter le déplacement sur 180° et éviter que le support ne pénètre dans la zone du passager arrière.

9. Support boîtier de combiné téléphonique portatif adaptable sur un véhicule automobile, selon la revendication 1, caractérisé par le fait que le boîtier porteur (41) sur lequel on vient poser le combiné fixé par un étrier articulé (43, 44, 45) avec un clips (46) pour l'immobiliser est prévu avec une plaque en U (33) ou une chape sur sa face arrière, qui permet de l'emboîter dans l'extrémité verticale (35) du support articulé relié à la tige d'appui-tête, ce qui facilite la mise en place du boîtier d'une seule main tout en conduisant le véhicule.
